# EUROPEAN PATENT SPECIFICATION

(11) **EP 3 796 221 B1**
(45) Date of publication and mention of the grant of the patent: **19.08.2026**
(21) Application number: 19197991.3
(22) Date of filing: 18.09.2019
(51) Int. Cl.: G06V 10/26, G06N 3/08, G06T 7/11, G06N 3/045, G06N 3/0464, G06V 10/82, G06N 7/01, G06N 3/0895, G06T 7/10

(54) **DEVICE AND METHOD FOR TRAINING A NEURAL NETWORK**
VORRICHTUNG UND VERFAHREN ZUM TRAINIEREN EINES NEURONALEN NETZWERKES
DISPOSITIF ET PROCÉDÉ DE FORMATION D'UN RÉSEAU NEURONAL

(43) Date of publication of application: 24.03.2021
(73) Proprietor: Robert Bosch GmbH, 70442 Stuttgart (DE)
(72) Inventor: Ngo, Thi Phuong Nhung, 76137 Karlsruhe (DE); Dax, Maximilian, 53119 Bonn (DE); Nguyen, Duc Tam, 76133 Karlsruhe (DE)

(56) References cited:
- FU KEREN ET AL: "Refinet: A Deep Segmentation Assisted Refinement Network for Salient Object Detection", IEEE TRANSACTIONS ON MULTIMEDIA, IEEE SERVICE CENTER, PISCATAWAY, NJ, US, vol. 21, no. 2, 1 February 2019 (2019-02-01), pages 457 - 469, XP011708071, ISSN: 1520-9210, [retrieved on 20190124], DOI: 10.1109/TMM.2018.2859746
- ZHANG ET AL.: "Supervision by Fusion: Towards Unsupervised learning of Deep Salient Object Detector", IEEE INTERNATIONAL CONFERENCE ON COMPUTER VISION, 2017, XP002797115
- ZHANG ET AL.: "Deep Unsupervised Saliency Detection: A Multiple Noisy Labeling Perspective", ARXIV:1803.10910, 2018, XP002797116

## Description

Various embodiments generally relate to a device and a method for training a neural network.

For automated production lines it is necessary to automatically detect defects of component parts, for example in different stages of production (e.g. in each production stage). By way of example, imaging sensors, such as camera sensors and/or video sensors, may be used to provide digital images of the component parts and neural networks may be used to process the digital images. Thus, it is necessary that the neural networks are capable to detect defective component parts using the provided digital images.

Various neural networks are applied in the field of computer vision. By way of example, neural networks may be used to provide a classified and/or segmented image using an image detected by an imaging sensor. However, a detected image may include a plurality of objects. Thus, it may be necessary to ascertain salient objects of the plurality of objects, i.e. objects that are visually relevant (visually salient objects).

In Zhu et al., Saliency Optimization from Robust Background Detection, IEEE Conference on Computer Vision and Pattern Recognition, 2014, a handcrafted image processing method using the spatial layout of image regions with respect to image boundaries (called boundary connectivity) and an optimization framework is described.

In Li et al., Saliency Detection via Dense and Sparse Reconstruction, IEEE International Conference on Computer Vision, 2013, a handcrafted image processing method using dense and sparse reconstruction is described.

In Jiang et al., Saliency Detection via Absorbing Markov Chain, IEEE International Conference on Computer Vision, 2013, a handcrafted image processing method using the time property in an absorbing Markov chain is described.

In Zou et al., HARF: Hierarchy-associated Rich Features for Salient Object Detection, IEEE International Conference on Computer Vision, 2015, a handcrafted image processing method using a hierarchy-associated feature construction framework is described.

Prior art handcrafted image processing methods are capable of detecting salient objects within images. However, the generated segmented images are noisy and the image processing methods are based on specific features, such as color, contrast, edges etc., and therefore are suitable for specific task, for example detecting flowers or people. Thus, it may be necessary to detect salient objects within images using a plurality of image processing methods.

In Zhang et al., Deep Unsupervised Saliency Detection: A Multiple Noisy Labeling Perspective, arXiv:1803.10910, 2018, a method of training a neural network using the noisy outputs of various handcrafted methods is described.

In Zhang et al., Supervision by Fusion: Towards Unsupervised learning of Deep Salient Object Detector, IEEE International Conference on Computer Vision, 2017, a method of training a neural network based on a fusion of the outputs of various handcrafted methods is described.

FU KEREN ET AL: "Refinet: A Deep Segmentation Assisted Refinement Network for Salient Object Detection", IEEE TRANSACTIONS ON MULTIMEDIA, IEEE SERVICE CENTER, PISCATAWAY, NJ, US, vol. 21, no. 2, 1 February 2019, pages 457-469, ISSN: 1520-9210, DOI: 10.1109/TMM.2018.2859746, discloses discloses an end-to-end deep learning-based refinement model named Refinet, which is based on fully convolutional network augmented with segmentation hypotheses. Intermediate saliency maps that are edge-aware are computed from segmentation-based pooling and then feed to a two-tier fully convolutional network for effective fusion and refinement.

Various embodiments of the invention are described with reference to the following drawings, in which:
- Figure 1: show a device according to various embodiments;
- Figure 2: shows a processing system for training a neural network according to various embodiments;
- Figure 3: shows a processing system for training a neural network according to various embodiments;
- Figure 4: shows a processing system for training a neural network according to various embodiments;
- Figure 5: shows a processing system for training a neural network according to various embodiments;
- Figure 6: shows a processing system for training a neural network according to various embodiments;
- Figure 7: shows a processing system for training a neural network according to various embodiments;
- Figure 8: shows a processing system for training a neural network according to various embodiments;
- Figure 9: shows a processing system for training a neural network according to various embodiments;
- Figure 10: shows a processing system for training a neural network according to various embodiments;
- Figure 11: shows a method of training a neural network according to various embodiments;
- Figure 12: shows a vehicle according to various embodiments;
- Figure 13: shows an agriculture vehicle according to various embodiments.
- Figure 14: shows an optical inspection system according to various embodiments.

In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be software being implemented or executed by a processor, e.g. any kind of computer program, e.g. a computer program using a virtual machine code such as e.g. Java. Any other kind of implementation of the respective functions which will be described in more detail below may also be understood as a "circuit" in accordance with an alternative embodiment.

Handcrafted image processing methods are capable of detecting salient objects within images, however, each image processing method uses specific features, such as color, contrast, edges etc., and treats each image individually. Illustratively, a neural network is trained to perform the task of a respective image processing method treating a plurality of images jointly and with that improving the detection of salient objects. Optionally, the neural network performs multiple iterations of detecting salient objects for each image and is further trained by using an average over prior iterations. Illustratively, in various embodiments, several neural networks are trained for a respective image processing method and another neural network is trained for each of the several neural networks, thus, combining the advantages of the respective image processing methods.

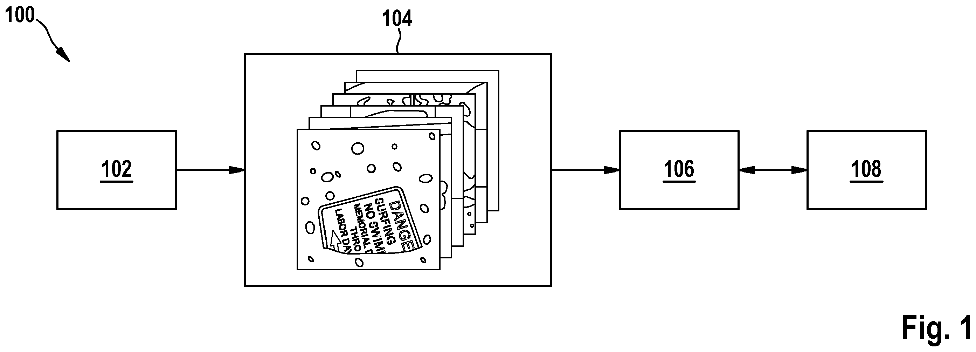

**FIG. 1** shows a device 100 according to various embodiments. The device 100 may include one or more sensors 102. The sensor 102 may be configured to provide (digital) images, for example a plurality of digital images 104. The sensor 102 may be any kind of sensor, which is capable of providing (digital) images, for example an imaging sensor, such as a camera sensor or a video sensor. The plurality of sensors may be of the same type of sensor or of different sensor types. The device 100 may further include a memory device 106. The memory device 106 may include a memory which is for example used in the processing carried out by a processor. A memory used in the embodiments may be a volatile memory, for example a DRAM (Dynamic Random Access Memory) or a nonvolatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory). The memory device 106 may be configured to store the plurality of digital images 104 provided by the one or more sensors 102. The device 100 may further include at least one processor 108. The at least one processor 108 may be any kind of circuit, i.e. any kind of logic implementing entity, as described above. In various embodiments, the processor 108 may be configured to process the plurality of digital images 104.

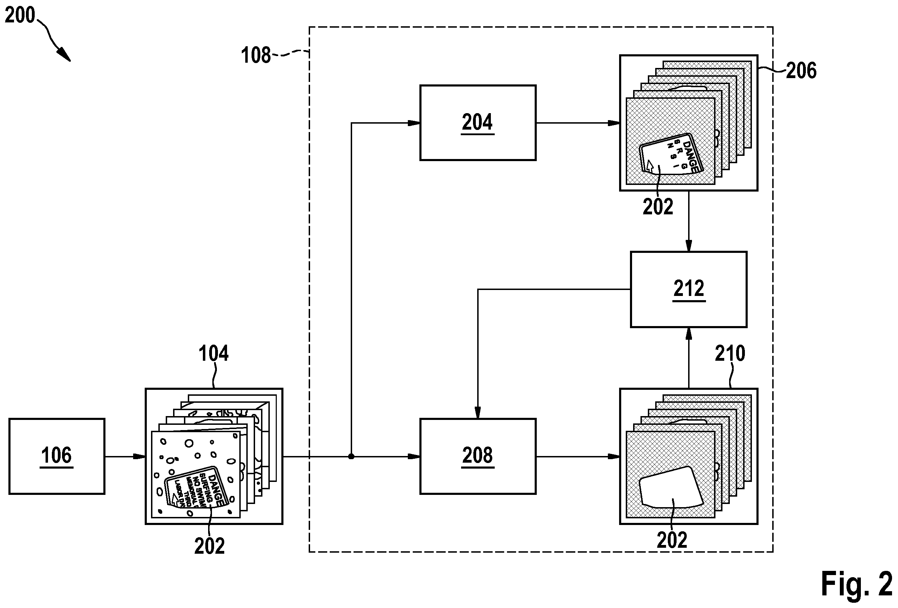

**FIG. 2** shows a processing system 200 for training a neural network according to various embodiments. The processing system 200 may include the memory device 106. The memory device 106 may store the plurality of digital images 104. Each digital image of the plurality of digital images 104 may include at least one object 202. The at least one object 202 may be a salient object. According to various embodiments, each digital image of the plurality of digital images 104 may include a plurality of objects, wherein at least one object 202 of the plurality of objects is a salient object, i.e. an object that is visually relevant (a visually salient object), for example, an object that is primarily recognized by a visual system, such as the human visual system. In other words, considering a human visual system, the salient object may attract the attention of a human due to visual stimuli. For example, a scene in front of a vehicle shows a street, driving cars, parking cars, and a wild animal crossing the street, wherein the wild animal may be the salient object, i.e. the at least one object 202. Considering computer vision, a digital image may illustrate the scene described above showing the salient object. The processing system 200 may further include the at least one processor 108. The processor 108 may be configured to process the plurality of digital images 104. The processor 108 may be configured to implement at least a part of a first image processing method 204. An image processing method may be any kind of code, which, if implemented by the processor 108, is capable of processing a digital image and to provide a segmentation image using the digital image, wherein the segmentation image may include a segmentation of the at least one salient object shown in the digital image. The first image processing method 204 may be based on one of the following approaches: boundary connectivity, dense and sparse reconstruction, the time property in an absorbing Markov chain, or hierarchy-associated rich features (HARF). The first image processing method 204 may be configured to process the plurality of digital images 104. The first image processing method 204 may be configured to generate a plurality of first segmentation images 206 for the plurality of digital images 104, wherein each first segmentation image of the plurality of first segmentation images may include a segmentation of the at least one (salient) object 202 for the associated digital image. The processor 108 may be configured to binarize each first segmentation image of the plurality of segmentation images 206. A first segmentation image may be binarized by setting each pixel having a value above a threshold γ to "1" and by setting each pixel having a value below or equal to the threshold γ to "0". The threshold γ may be 1.5*µ_{saliency}, wherein µ_{saliency} is the mean saliency of the first image processing method 204. The mean saliency may be determined by the sum of the pixel values of the plurality of digital images 104 divided by the product of the total number of pixels and the number of digital images of the plurality of digital images 104.

The processor 108 may be configured to implement at least a part of a first fully convolutional neural network 208. The first fully convolutional neural network 208 may be configured to process the plurality of digital images 104. The first fully convolutional neural network 208 may be configured to generate a plurality of segmentation images for the plurality of digital images 104. The first fully convolutional neural network 208 may be configured to generate a plurality of first intermediate segmentation images 210 for the plurality of digital images 104, wherein each first intermediate segmentation image of the plurality of first intermediate segmentation images 210 may include a segmentation of the at least one object 202 for the associated digital image. The processor 108 may be further configured to adapt the first fully convolutional neural network 208 by comparing the plurality of first intermediate segmentation images 210 with the associated first segmentation images. The processor 108 may be configured to determine a first total loss value 212 for each first intermediate segmentation image of the plurality of first segmentation images 210 by comparing each first intermediate segmentation image with the associated first segmentation image. In other words, the first total loss value 212 may be a loss determined across the pixels of each first intermediate segmentation image of the plurality of first intermediate segmentation images 210 and the associated first segmentation image. Binarizing each first segmentation image of the plurality of segmentation images 206 has the effect that the first fully convolutional neural network 208 is less sensitive to over-fitting to large noise of the first segmentation image.

The first total loss value 212 (L_{β,1}) may be determined by equation (1): ${L}_{β , 1} = 1 - {F}_{β}$ wherein: ${F}_{β} = \left(1+{β}^{2}\right) \frac{precision ∗ recall}{{β}^{2} precision + recall}$ wherein *F_{β}* is an F-measure, i.e. a harmonic mean of precision and recall with respect to a first segmentation image of the plurality of first segmentation images 206 and wherein *β* is a weighting factor to weight precision and recall. Precision is defined as the ratio of the number of true positive pixels to all pixels assigned as positive. Recall is defined as the ratio of the number of true positive pixels to the ground truth number of positive pixels (i.e. the sum of true positive pixels and false negative pixels). Using the linear loss *L*_{*β*,*1*} has the effect that first total loss value 212 is more robust to outliers and noise as compared to high-order losses, such as a mean-square-error.

The processor 108 may be configured to adapt, i.e. to train, the first neural network using the first total loss value 212. The processor 108 may be configured to adapt the first fully convolutional neural network in such that the first total loss value 212 is minimized. The first fully convolutional neural network 208 may be trained until the first total loss value 212 is lower than a predetermined value.

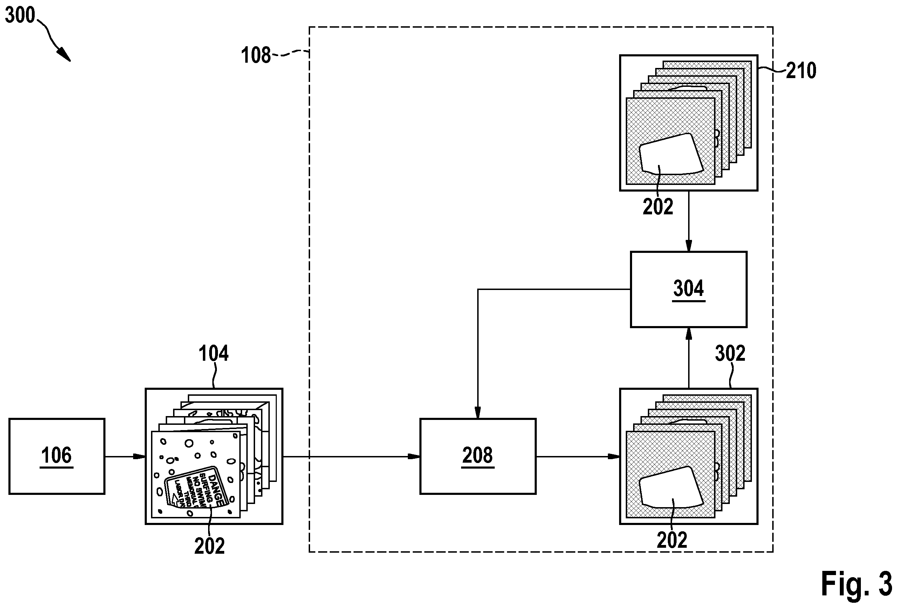

**FIG. 3** shows a processing system 300 for training a neural network according to various embodiments. The processing system 300 may include the memory device 106. The memory device 106 may store the plurality of digital images 104. The processing system 300 may further include the at least one processor 108. The processor 108 may be configured to process the plurality of digital images 104. The processor 108 may be configured to implement at least a part of the first neural network 208. The first fully convolutional neural network 208 may have been trained using the processing system 200, as described above. In other words, the first neural network 208 may have been trained using the first total loss value 212.

The first fully convolutional neural network 208 is configured to generate a plurality of second intermediate segmentation images 302 for the plurality of digital images, wherein each second intermediate segmentation image may include a segmentation of the at least one object 202 for the associated digital image. The processor 108 may be further configured to adapt the first fully convolutional neural network 208 by comparing the plurality of second intermediate segmentation images 302 with the associated first intermediate segmentation images. The processor 108 may be configured to apply a fully-connected conditional random field (CRF) to each pixel of each first intermediate segmentation image of the plurality of first intermediate segmentation images 210. The processor 108 may be configured to determine a second total loss value 304 for each second intermediate segmentation image of the plurality of second intermediate segmentation images 210 by comparing the second intermediate segmentation image with the associated first intermediate segmentation image. The processor may be configured to compare a second intermediate segmentation image with the associated first intermediate segmentation image after applying the CRF to the first intermediate segmentation image. In other words, the second total loss value 304 may be a loss determined across the pixels of each second intermediate segmentation image of the plurality of second intermediate segmentation images 302 and the associated first intermediate segmentation image. The second total loss value 304 (*L*_{*β*,*2*}) may be determined using equation (1). The processor 108 may be configured to adapt the first fully convolutional neural network 208 using the second total loss value 304. The processor 108 may be configured to adapt the first fully convolutional neural network 208 in such that the second total loss value 304 is minimized. The first fully convolutional neural network 208 may be trained until the second total loss value 304 is lower than a predetermined value.

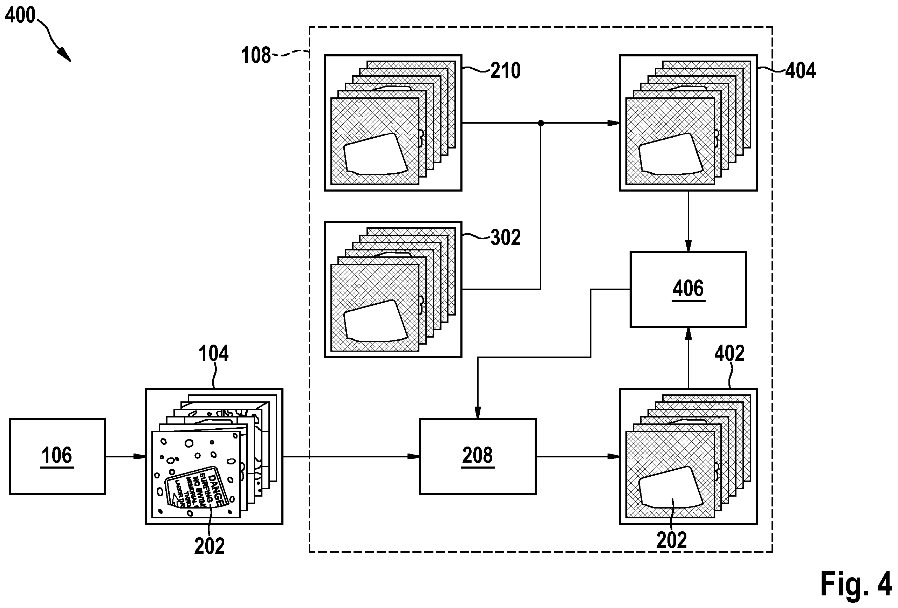

**FIG. 4** shows a processing system 400 for training a neural network according to various embodiments. The processing system 400 may include the memory device 106. The memory device 106 may store the plurality of digital images 104. The processing system 400 may further include the at least one processor 108. The processor 108 may be configured to process the plurality of digital images 104. The processor 108 may be configured to implement at least a part of the first fully convolutional neural network 208. The first fully convolutional neural network 208 may have been trained using the processing system 200 as well as the processing system 300, as described above. In other words, the first fully convolutional neural network 208 may have been trained using the first total loss value 212 and the second total loss value 304.

The first fully convolutional neural network 208 may be configured to generate a plurality of third intermediate segmentation images 402 for the plurality of digital images, wherein each third intermediate segmentation image may include a segmentation of the at least one object 202 for the associated digital image. The processor 108 may be further configured to generate a plurality of first moving average segmentation images 404 using the plurality of first intermediate segmentation images 210 and the plurality of second intermediate segmentation images 302. The processor 108 may be configured to apply a CRF to each pixel of each first intermediate segmentation image of the plurality of first intermediate segmentation images 210 and to each pixel of each second intermediate segmentation image of the plurality of second intermediate segmentation images 302. The processor 108 may be further configured to add (for example a weighted sum) each pixel of each first intermediate segmentation image to the associated pixel of the second intermediate segmentation image. The processor 108 may be configured to add each pixel of each first intermediate segmentation image to the associated pixel of the second intermediate segmentation image after applying a CRF to each pixel of each first intermediate segmentation image and/or to each pixel of each second intermediate segmentation image.

The processor 108 may be further configured to adapt the first neural network 208 by comparing the plurality of third intermediate segmentation images 402 with the associated first moving average segmentation images. The processor 108 may be configured to determine a third total loss value 406 for each third intermediate segmentation image of the plurality of third intermediate segmentation images 402 by comparing the third intermediate segmentation image with the associated first moving average segmentation image. In other words, the third total loss value 406 may be a loss determined across the pixels of each third intermediate segmentation image of the plurality of third intermediate segmentation images 402 and the associated first moving average segmentation image. The third total loss value 406 (*L_{β,3}*) may be determined using equation (1). The processor 108 may be configured to adapt the first fully convolutional neural network 208 using the third total loss value 406. The processor 108 may be configured to adapt the first fully convolutional neural network 208 in such that the third total loss value 406 is minimized. The first fully convolutional neural network 208 may be trained until the third total loss value 406 is lower than a predetermined value.

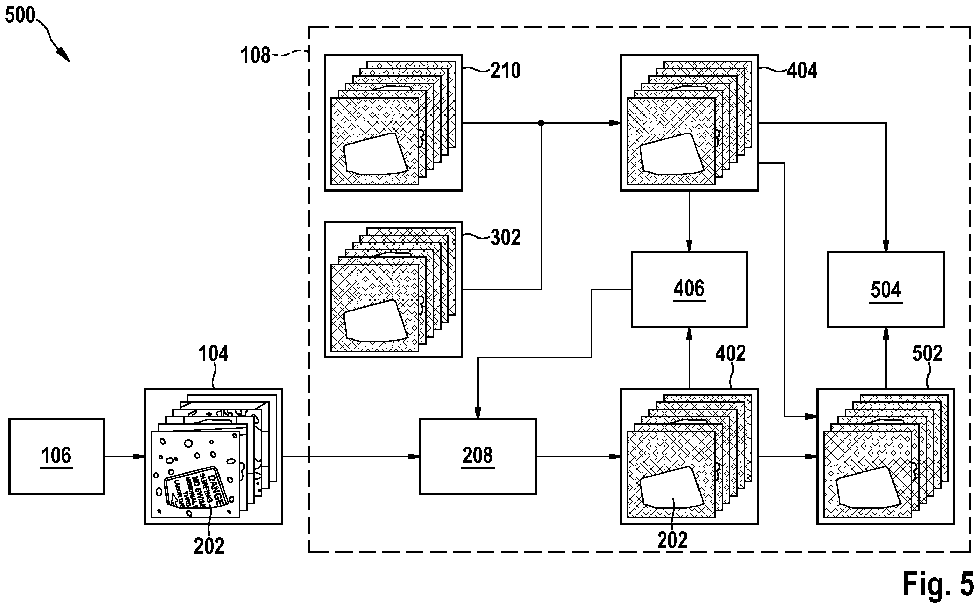

**FIG. 5** shows a processing system 500 for training a neural network according to various embodiments. The processing system 500 may correspond substantially to the processing system 400, wherein the processor 108 may be further configured to generate a plurality of third moving average segmentation images 502 using the plurality of third intermediate segmentation images 402 and the plurality of first moving average segmentation images 404. A third moving average segmentation image may be determined by applying a CRF to each pixel of a third intermediate segmentation image and subsequently adding (for example a weighted sum) each pixel of the third intermediate segmentation image to the associated pixel of the first moving average segmentation image.

A third moving average segmentation image may be determined by equation (3): $MVA \left(x, p, k\right) = \left(1-α\right) ∗ CRF \left(y\left(x, p\right)\right) + α ∗ MVA \left(x,p,k-1\right)$ wherein *MVA(x, p, k)* is a *k^{th}* moving average segmentation image (for example a third moving average segmentation image) associated to a digital image x and wherein *p* gives a pixel of the plurality of pixels of the moving average segmentation image. In other words, equation (3) may be solved for each pixel *p* of a moving average segmentation image. *MVA(x, p, k-1)* is the prior moving average segmentation image, i.e. the moving average segmentation image generated in the prior iteration (for example, if *MVA(x, p, k)* is the third moving average segmentation image, *MVA(x, p, k-1)* is the first moving average segmentation image) associated to the digital image x and the pixel *p*. CRF is a fully connected conditional random field and *y(x, p)* is the output generated by the first neural network for the digital image x and the pixel *p*. In other words, *y(x, p)* is the value of a pixel *p* of a segmentation image generated by the first neural network for a digital image x (for example, if *MVA(x, p, k)* is the third moving average segmentation image, *y(x, p)* is the associated third intermediate segmentation image). Furthermore, a is a weighting factor.

The processor 108 may be further configured to determine a fourth total loss value 504 (*L*_{*β*,*4*}) for each third moving average segmentation image of the plurality of third moving average segmentation images 502 using the third moving average segmentation image and the associated first moving average segmentation image. The fourth total loss value 504 may be determined using equation (1). The processor 108 may be configured to adapt the first fully convolutional neural network 208 using the third total loss value 406 (for example minimizing the third total loss value 406) until the fourth total loss value 504 is lower than a predetermined value. In other words, the first fully convolutional neural network 208 may be trained using the third total loss value 406 until the respectively determined moving average segmentation image reaches a stable state. In even other words, the predetermined value for the third total loss value 406 may be a stop criterion for training the first fully convolutional neural network 208. Thus, the first neural network may be trained unsupervised. The number of generated segmentation images used for determining a moving average image may be defined to a pre-determined maximum number of segmentation images generated in previous iterations. This has the effect that over-fitting of the first neural network is prevented.

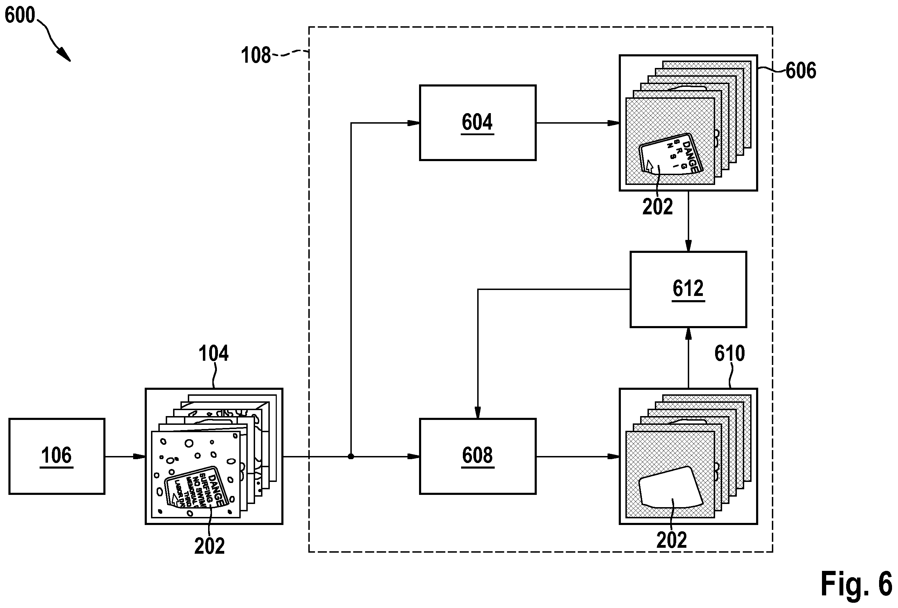

**FIG. 6** shows a processing system 600 for training a neural network according to various embodiments. The processing system 600 may include the memory device 106. The memory device 106 may store the plurality of digital images 104. The processing system 600 may further include the at least one processor 108. The processor 108 may be configured to implement at least a part of a second image processing method 604. The second image processing method 604 may be based on one of the following approaches: boundary connectivity, dense and sparse reconstruction, the time property in an absorbing Markov chain, or hierarchy-associated rich features (HARF), wherein the second image processing method 604 may be different of the first image processing method 204. The second image processing method 604 may be configured to generate a plurality of third segmentation images 606 for the plurality of digital images 104, wherein each third segmentation image of the plurality of third segmentation images 606 may include a segmentation of the at least one object 202 for the associated digital image. The processor 108 may be configured to binarize each third segmentation image of the plurality of third segmentation images 606. Binarizing a third segmentation image may correspond substantially to binarizing a first segmentation image, wherein µ_{saliency} may be the mean saliency of the second image processing method 604

The processor 108 may be configured to implement at least a part of a second fully convolutional neural network 608. The second fully convolutional neural network 608 may be configured to generate a plurality of fourth intermediate segmentation images 610 for the plurality of digital images 104, wherein each fourth intermediate segmentation image of the plurality of fourth intermediate segmentation images 610 may include a segmentation of the at least one object 202 for the associated digital image. The processor 108 may be further configured to adapt the second fully convolutional neural network 608 by comparing the plurality of fourth intermediate segmentation images 610 with the associated third segmentation images. The comparison of the plurality of fourth intermediate segmentation images 610 with the associated third segmentation images may correspond substantially to the comparison of the plurality of first intermediate segmentation images 210 with the associated first segmentation images. The processor 108 may be configured to determine a fifth total loss value 612 for each fourth intermediate segmentation image of the plurality of fourth intermediate segmentation images 610 by comparing each fourth intermediate segmentation image with the associated third segmentation images. In other words, the fifth total loss value 612 may be a loss determined across the pixels of each fourth intermediate segmentation image of the plurality of fourth intermediate segmentation images 610 and the associated third segmentation image. The fifth total loss value 612 (L_{β,5}) may be determined by equation (1).

The processor 108 may be configured to adapt the second fully convolutional neural network 608 using the fifth total loss value 612. The processor 108 may be configured to adapt the second fully convolutional neural network 608 in such that the fifth total loss value 612 is minimized. The second fully convolutional neural network 608 may be trained until the fifth total loss value 612 is lower than a predetermined value.

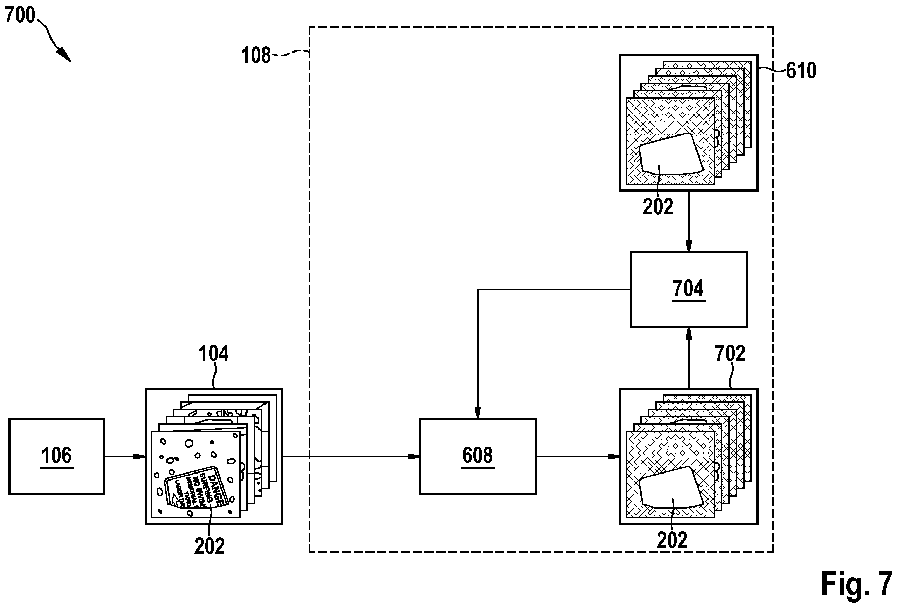

**FIG. 7** shows a processing system 700 for training a neural network according to various embodiments. The processing system 700 may include the memory device 106. The memory device 106 may store the plurality of digital images 104. The processing system 700 may further include the at least one processor 108. The processor 108 may be configured to implement at least a part of the second fully convolutional neural network 608. The second fully convolutional neural network 608 may have been trained using the processing system 600, as described above. In other words, the second fully convolutional neural network 608 may have been trained using the fifth total loss value 612.

The second fully convolutional neural network 608 may be configured to generate a plurality of fifth intermediate segmentation images 702 for the plurality of digital images, wherein each fifth intermediate segmentation image may include a segmentation of the at least one object 202 for the associated digital image. The processor 108 may be further configured to adapt the second fully convolutional neural network 608 by comparing the plurality of fifth intermediate segmentation images 702 with the associated fourth intermediate segmentation images. The processor 108 may be configured to apply a fully-connected conditional random field (CRF) to each pixel of each fourth intermediate segmentation image of the plurality of fourth intermediate segmentation images 610 The processor 108 may be configured to determine a sixth total loss value 704 for each fifth intermediate segmentation image of the plurality of fifth intermediate segmentation images 702 by comparing each fifth intermediate segmentation image with the associated fourth intermediate segmentation image. The processor 108 may be configured to compare a fifth intermediate segmentation image with the associated fourth intermediate segmentation image after applying the CRF to the fourth intermediate segmentation image. In other words, the sixth total loss value 704 may be a loss determined across the pixels of each fifth intermediate segmentation image of the plurality of fifth intermediate segmentation images 702 and the associated fourth intermediate segmentation image. The sixth total loss value 704 (*L*_{*β*,*6*}) may be determined using equation (1). The processor 108 may be configured to adapt the second fully convolutional neural network 608 using the sixth total loss value 704. The processor 108 may be configured to adapt the second fully convolutional neural network 608 in such that the sixth total loss value 704 is minimized. The second fully convolutional neural network 608 may be trained until the sixth total loss value 704 is lower than a predetermined value.

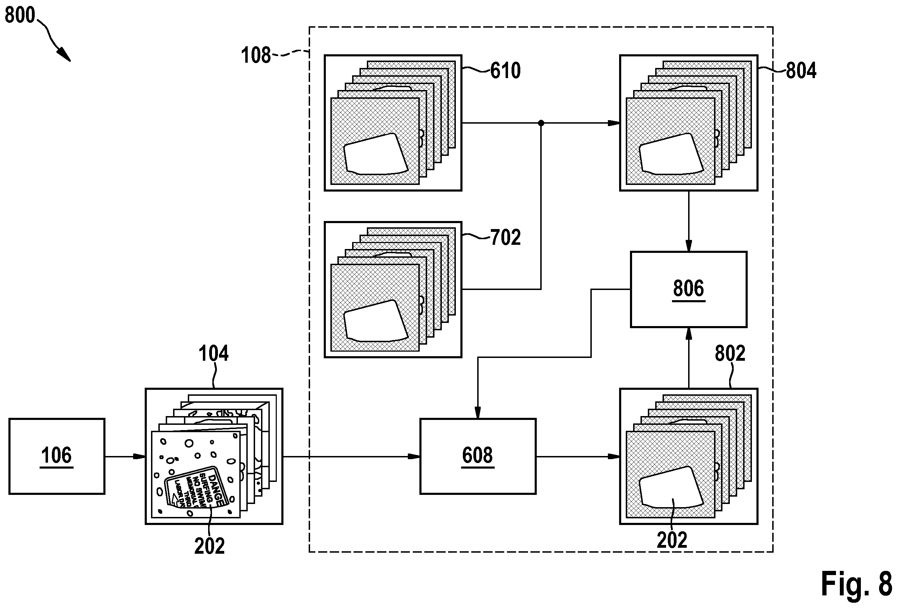

**FIG. 8** shows a processing system 800 for training a neural network according to various embodiments. The processing system 800 may include the memory device 106. The memory device 106 may store the plurality of digital images 104. The processing system 800 may further include the at least one processor 108. The processor 108 may be configured to implement at least a part of the second fully convolutional neural network 608. The second fully convolutional neural network 608 may have been trained according to the processing system 600 as well as according to the processing system 700, as described above. In other words, the second fully convolutional neural network 608 may have been trained using the fifth total loss value 612 and the sixth total loss value 704.

The second fully convolutional neural network 608 may be configured to generate a plurality of sixth intermediate segmentation images 802 for the plurality of digital images, wherein each sixth intermediate segmentation image may include a segmentation of the at least one object 202 for the associated digital image. The processor 108 may be further configured to generate a plurality of second moving average segmentation images 804 using the plurality of fourth intermediate segmentation images 610 and the plurality of fifth intermediate segmentation images 702. The processor 108 may be configured to apply a CRF to each pixel of each fourth intermediate segmentation image of the plurality of fourth intermediate segmentation images 610 and to each pixel of each fifth intermediate segmentation image of the plurality of fifth intermediate segmentation images 702. The processor 108 may be further configured to add (for example a weighted sum) each pixel of each fourth intermediate segmentation image to the associated pixel of the fifth intermediate segmentation image. The processor 108 may be configured to add each pixel of each fourth intermediate segmentation image to the associated pixel of the fifth intermediate segmentation image after applying a CRF to each pixel of each fourth intermediate segmentation image and/or to each pixel of each fifth intermediate segmentation image.

The processor 108 may be further configured to adapt the second neural network 608 by comparing the plurality of sixth intermediate segmentation images 802 with the associated second moving average segmentation images. The comparison of the plurality of sixth intermediate segmentation images 802 with the associated second moving average segmentation images may correspond substantially to the comparison of the plurality of third intermediate segmentation images 402 with the associated first moving average segmentation images. The processor 108 may be configured to determine a seventh total loss value 806 for each sixth moving average segmentation image of the plurality of sixth moving average segmentation images 802 by comparing each sixth moving average segmentation image with the associated second moving average segmentation image. In other words, the seventh total loss value 806 may be a loss determined across the pixels of each sixth intermediate segmentation image of the plurality of sixth intermediate segmentation images 802 and the associated second moving average segmentation image. The seventh total loss value 806 (*L*_{*β*,*7*}) may be determined using equation (1). The processor 108 may be configured to adapt the second fully convolutional neural network 608 using the seventh total loss value 806. The processor 108 may be configured to adapt the second fully convolutional neural network 608 in such that the seventh total loss value 806 is minimized. The second fully convolutional neural network 608 may be trained until the seventh total loss value 806 is lower than a predetermined value.

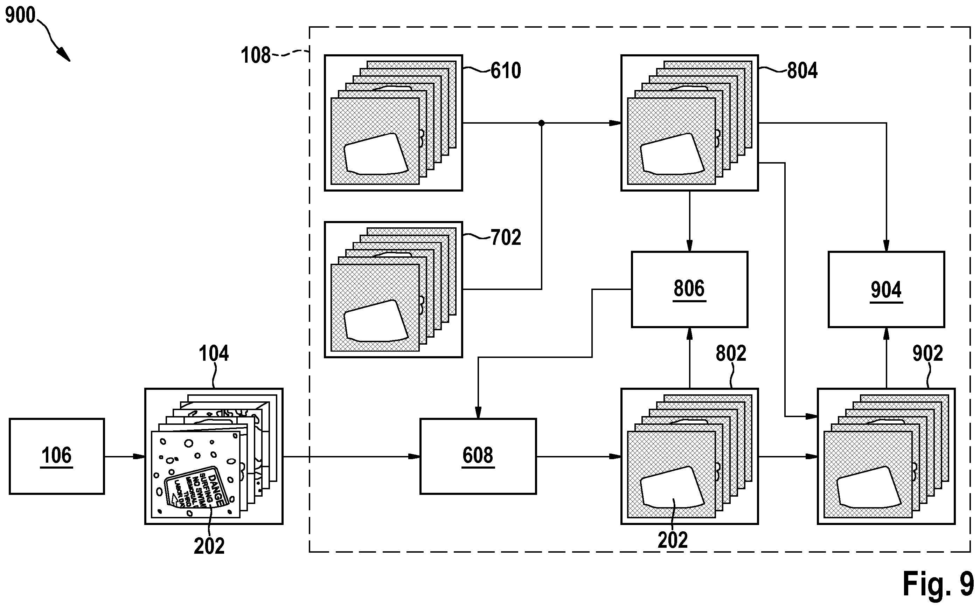

**FIG. 9** shows a processing system 900 for training a neural network according to various embodiments. The processing system 900 may correspond substantially to the processing system 800, wherein the processor 108 may be further configured to generate a plurality of fourth moving average segmentation images 902 using the plurality of sixth intermediate segmentation images 802 and the plurality of second moving average segmentation images 804. A fourth moving average segmentation image may be determined by equation (3).

The processor 108 may be further configured to determine an eighth total loss value 904 (*L_{β,8}*) for each fourth moving average segmentation image of the plurality of fourth moving average segmentation images 902 using the fourth moving average segmentation image and the associated second moving average segmentation image. The eighth total loss value 904 may be determined using equation (1). The processor 108 may be configured to adapt the second fully convolutional neural network 608 using the seventh total loss value 806 (for example minimizing the seventh total loss value 806) until the eighth total loss value 904 is lower than a predetermined value.

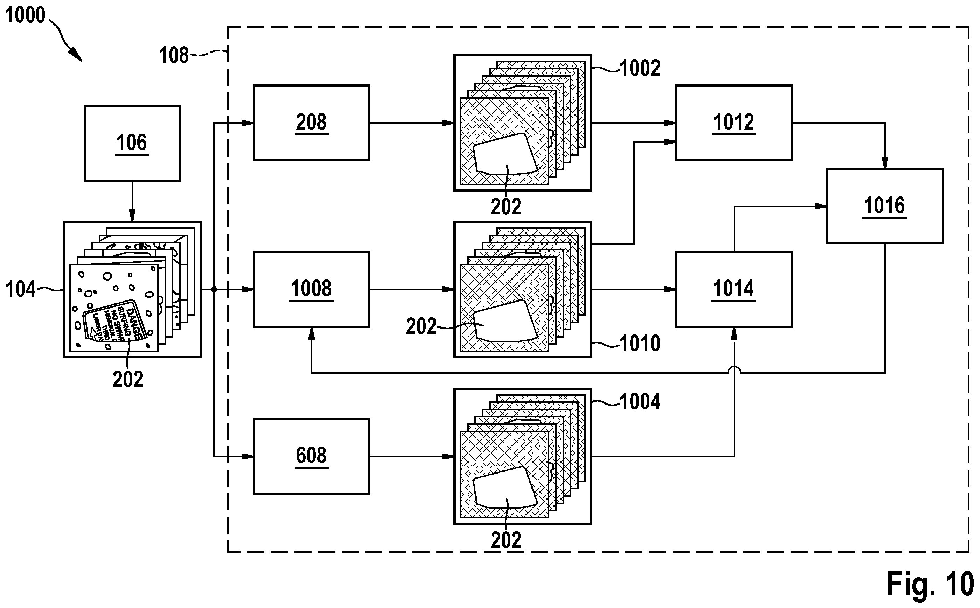

**FIG. 10** shows a processing system 1000 for training a neural network according to various embodiments. The processing system 1000 may include the memory device 106. The memory device 106 may store the plurality of digital images 104. The processing system 1000 may further include the at least one processor 108. The processor 108 may be configured to implement at least a part of the trained first fully convolutional neural network 208 and at least a part of the trained second fully convolutional neural network 608. The first fully convolutional neural network 208 and the second fully convolutional neural network 608 may have been trained as described above. The trained first neural network 208 may be configured to generate a plurality of second segmentation images 1002 for the plurality of digital images 104, wherein each second segmentation image 1002 may include a segmentation of the at least one object 202 for the associated digital image. The trained second neural network 608 may be configured to generate a plurality of fourth segmentation images 1004 for the plurality of digital images 104, wherein each fourth segmentation image 1004 may include a segmentation of the at least one object 202 for the associated digital image.

The processor 108 may be further configured to implement at least a part of a third neural network 1008. The third neural network 1008 may be configured to generate a plurality of fifth segmentation images 1010 for the plurality of digital images 104, wherein each fifth segmentation image 1010 may include a segmentation of the at least one object 202 for the associated digital image. The processor 108 may be configured to adapt the third neural network 1008 by comparing the plurality of fifth segmentation images 1010 with the associated second segmentation images and the associated fourth segmentation images.

The processor 108 may be configured to determine a first intermediate loss value 1012 for each fifth segmentation image of the plurality of fifth segmentation images 1010 by comparing each fifth segmentation image with the associated second segmentation image. The processor 108 may be further configured to determine a second intermediate loss value 1014 for each fifth segmentation image of the plurality of fifth segmentation images 1010 by comparing each fifth segmentation image with the associated fourth segmentation image. The first intermediate loss value 1012 and/or the second intermediate loss value 1014 may be determined by equation (1). The processor 108 may be configured to determine a ninth total loss value 1016 for each fifth segmentation image of the plurality of fifth segmentation images 1010 using the first intermediate loss value 1012 and the second intermediate loss value 1014. The ninth total loss value 1016 may be determined by an arithmetic mean of the first intermediate loss value 1012 and the second intermediate loss value 1014. The ninth total loss value 1016 (*Lₑₙ*) may be determined by equation (4): ${L}_{en} = \frac{1}{n} {\sum }_{i} {L}_{β , i}$ wherein *L*_{*β*,*i*} is an intermediate loss value (for example, the first intermediate loss value 1012 for i=1 and the second intermediate loss value 1014 for i=2), wherein *L*_{*β*,*i*} is determined by equation (1), and wherein n is the number of intermediate loss values (for example, n=2 if the ninth total loss value *Lₑₙ* is determined for the first intermediate loss value 1012 and the second intermediate loss value 1014).

The processor 108 may be configured to adapt the third neural network 1008 using the ninth total loss value 1016 (for example minimizing the ninth total loss value 1016). until the ninth total loss value 904 is lower than a predetermined value. The processor 108 may be configured to adapt the third neural network 1008 until the ninth total loss value 1016 is lower than a predetermined value.

According to various embodiments, the processing system 1000 includes a plurality of neural networks, wherein each neural network is assigned to an image processing method of a plurality of image processing methods. Each processing method may be configured to process the plurality of digital images 104 and to provide a plurality of segmentation images for the plurality of digital images 104. Each neural network of the plurality of neural networks may be trained using the plurality of digital images and the associated segmentation images generated by the respective image processing method, wherein training a neural network may correspond substantially to the training of the first neural network or the second neural network. The third neural network 1008 may be trained using the plurality of digital images and the associated segmentation images generated by the plurality of image processing methods. Each trained neural network may be configured to generate a plurality of segmentation images for the plurality of digital images and the processor 108 may be configured to determine a plurality of intermediate loss values by comparing each fifth segmentation image of the plurality of fifth segmentation images 1010 with each associated segmentation image generated by the plurality of neural networks. The ninth total loss value 1016 may be determined by solving equation (4) for the plurality of intermediate loss values (*L*_{*β*,*i*}).

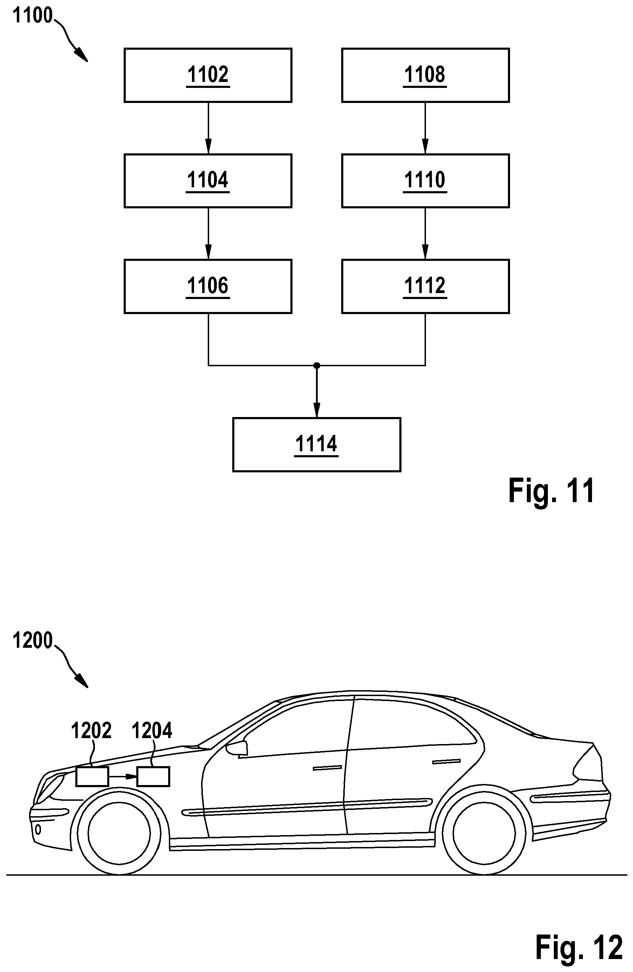

**FIG. 11** shows a method 1100 of training a neural network according to various embodiments. The method 1100 may include a first image processing method 204 generating a plurality of first segmentation images 206 for a plurality of digital images 104 (in 1102), wherein each digital image of the plurality of digital images 104 may include at least one object 202 and wherein each first segmentation image of the plurality of first segmentation images 206 may include a segmentation of the at least one object 202 for the associated digital image. The method 1100 may include training a first fully convolutional neural network 208 using the plurality of digital images 104 and the associated first segmentation images (in 1104). The method 1100 may include the trained first fully convolutional neural network 208 generating a plurality of second segmentation images 1002 for the plurality of digital images 104 (in 1106), wherein each second segmentation image of the plurality of second segmentation images 1002 may include a segmentation of the at least one object 202 for the associated digital image. The method 1100 may further include a second image processing method 604 generating a plurality of third segmentation images 606 for the plurality of digital images 104 (in 1108), wherein each third segmentation image of the plurality of third segmentation images 606 may include a segmentation of the at least one object 202 for the associated digital image. The method 1100 may include training a second fully convolutional neural network 608 using the plurality of digital images 104 and the associated third segmentation images (in 1110). The method 1100 may include the trained second fully convolutional neural network 608 generating a plurality of fourth segmentation images 1004 for the plurality of digital images 104 (in 1112), wherein each fourth segmentation image of the plurality of fourth segmentation images 1104 may include a segmentation of the at least one object 202 for the associated digital image. The method 1100 may further include training a third neural network 1008 using the plurality of digital images 104 and the associated second segmentation images and fourth segmentation images (in 1114).

**FIG. 12** shows a vehicle 1200 according to various embodiments. The vehicle 1200 may be a vehicle with a combustion engine, an electric vehicle, a hybrid vehicle, or a combination thereof. Further, the vehicle 1200 may be a car, a truck, a ship, a drone, an aircraft or the like. The vehicle 1200 may include at least one sensor 1202. The sensor 1202 may be an imaging sensor, such as a camera sensor or a video sensor, wherein the sensor 1202 may be configured to provide a plurality of digital images 104, wherein each digital image may include at least one (salient) object 202. The vehicle 1200 may include a driving assistance system 1204. The driving assistance system 1204 may include the memory device 106. The driving assistance system 1204 may further include the processor 108. The processor 108 may implement a neural network. The neural network may be configured to process the plurality of digital images 104 provided by the sensor 1202 and to generate a plurality of segmentation images for the plurality of digital images 104, wherein each segmentation image may include a segmentation of the at least one object 202 for the associated digital image. The neural network may be the trained third neural network 1008.

According to various embodiments, the neural network was trained according to the method 1100 of training a neural network such that the trained neural network is capable of detecting salient objects within digital images. The driving assistance system 1204 may be configured to control the vehicle 1200 using the processed plurality of digital images 104, i.e. using the generated plurality of segmentation images. In other words, the driving assistance system 1204 may be configured to process the plurality of digital images 104 and to output a control command to one or more actuators of the vehicle 1200 using the generated plurality of segmentation images. Thus, the driving assistance system 1204 may influence the current vehicle handling using the processed plurality of digital images 104, for example the current vehicle handling may be maintained or changed. Changing the current vehicle handling may be for example an intervention in the vehicle handling due to safety reasons, such as an emergency braking.

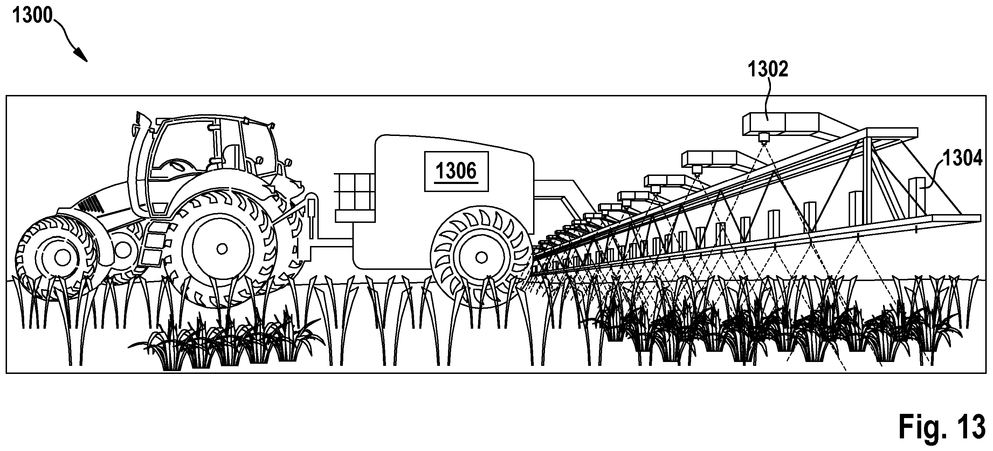

**FIG. 13** shows an agriculture vehicle 1300 according to various embodiments. The agriculture vehicle 1300 may be any kind of vehicle used in the agriculture sector, i.e. for example for farming, forestry or the like. The agriculture vehicle 1300 may be a tractor, a truck, a drone, an aircraft, a helicopter or the like. The agriculture vehicle 1300 may include at least one sensor 1302. The sensor 1302 may be an imaging sensor, such as a camera sensor or a video sensor, wherein the sensor 1302 may be configured to provide a plurality of digital images 104, wherein each digital image may include at least one (salient) object 202. The agriculture vehicle 1300 may include a spraying device 1304. The spraying device 1304 may be configured to spray herbicides. The agriculture vehicle 1300 may further include a spraying system 1306. The spraying system 1306 may include the memory device 106. The spraying system 1306 may further include the processor 108. The processor 108 may implement a neural network. The neural network may be configured to process the plurality of digital images 104 provided by the sensor 1302 and to generate a plurality of segmentation images for the plurality of digital images 104, wherein each segmentation image may include a segmentation of the at least one object 202 for the associated digital image. The neural network may be the trained third neural network 1008.

According to various embodiments, the neural network was trained according to the method 1100 of training a neural network such that the trained neural network is capable of detecting salient objects within digital images. The spraying system 1306 may be configured to control the spraying device 1304 using the processed plurality of digital images 104, i.e. using the generated plurality of segmentation images. In other words, the spraying system 1306 may be configured to process the plurality of digital images 104 and to output a control command to one or more actuators of the spraying device 1304 using the generated plurality of segmentation images. For example, the spraying system 1306 may control the spraying device 1304 in such that the spraying device sprays herbicides if the spraying system 1306 detects weeds using the plurality of segmentation images generated by the trained neural network. In other words, the at least one (salient) object 202 included in the plurality of digital images 104 may be a weed, the trained neural network may generate a plurality of segmentation images, wherein each segmentation image may include a segmentation of the weed, and the spraying system 1306 may control the spraying device 1304 to spray herbicides onto the detected weeds.

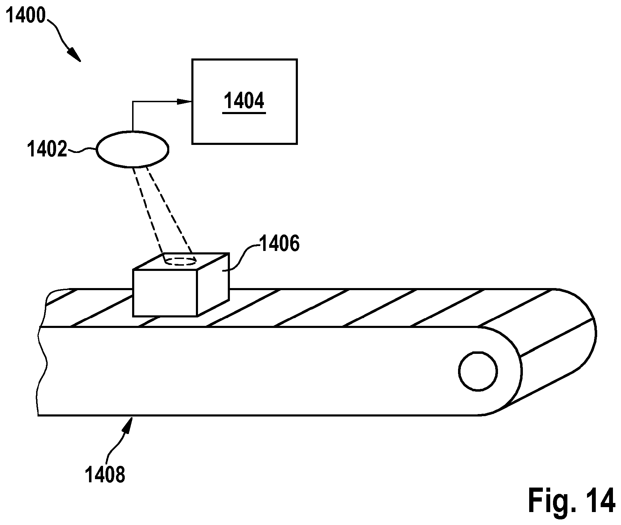

**FIG. 14** shows an optical inspection system 1400 according to various embodiments. The optical inspection system 1400 may be an automatic optical inspection system. The optical inspection system 1400 may be an automatic optical inspection system used in a production plant. The optical inspection system 1400 may include at least one sensor 1402. The sensor 1402 may be an imaging sensor, such as a camera sensor or a video sensor, wherein the sensor 1402 may be configured to provide a plurality of digital images 104, wherein each digital image may include at least one (salient) object 202. The optical inspection system 1400 may include a defect detection system 1404. The defect detection system 1404 may include the memory device 106. The defect detection system 1404 may further include the processor 108. The processor 108 may implement a neural network. The neural network may be configured to process the plurality of digital images 104 provided by the sensor 1402 and to generate a plurality of segmentation images for the plurality of digital images 104, wherein each segmentation image may include a segmentation of the at least one object 202 for the associated digital image. The neural network may be the trained third neural network 1008.

According to various embodiments, the neural network was trained according to the method 1100 of training a neural network such that the trained neural network is capable of detecting salient objects within digital images. The sensor 1402 may be configured to provide a plurality of digital images 104 of at least one part 1406. The part 1406 may be a device, a component or the like. The part 1406 may be moved on a conveyor 1408. The defect detection system 1404 may be configured to detect defective parts, for example a defect of part 1406, using the processed plurality of digital images 104, i.e. using the generated plurality of segmentation images. In other words, the defect detection system 1404 may be configured to process the plurality of digital images 104 and to output a control command to one or more actuators of the (automatic) optical inspection system 1400 using the generated plurality of segmentation images. For example, the defect detection system 1404 may control a robotic arm in such that the robotic arm removes the part 1406 from the conveyor 1408 if a defect is detected. In other words, the at least one (salient) object 202 included in the plurality of digital images 104 may be a defect of the part 1406, the trained neural network may generate a plurality of segmentation images, wherein each segmentation image may include a segmentation of the defect, and the defect detection system 1404 may control the robotic arm to remove the defective part from the conveyor. Thus, the (automatic) optical inspection system 1400 may be capable to automatically detect defective parts.

## Claims

1. A method of computer implemented training a neural network, the method comprising:
• a first image processing method generating a plurality of first segmentation images for a plurality of digital images, wherein each digital image of the plurality of digital images comprises at least one object and wherein each first segmentation image of the plurality of first segmentation images comprises a segmentation of the at least one object for the associated digital image, , wherein the first image processing method is selected from the group consisting of boundary connectivity, dense and sparse reconstruction, a time property in an absorbing Markov chain, and hierarchy-associated rich features (HARF);;
• training a first fully convolutional neural network using the plurality of digital images and the associated first segmentation images, wherein training the first fully convolutional neural network comprises:
∘ the first fully convolutional neural network generating a plurality of first intermediate segmentation images for the plurality of digital images, wherein each first intermediate segmentation image of the plurality of first intermediate segmentation images comprises a segmentation of the at least one object for the associated digital image;
∘ adapting the first fully convolutional neural network using a first loss value determined for each first intermediate segmentation image of the plurality of first intermediate segmentation images by comparing the respective first intermediate segmentation image with the associated first segmentation image;
• the trained first fully convolutional neural network generating a plurality of second segmentation images for the plurality of digital images, wherein each second segmentation image of the plurality of second segmentation images comprises a segmentation of the at least one object for the associated digital image;
• a second image processing method generating a plurality of third segmentation images for the plurality of digital images, wherein each third segmentation image of the plurality of third segmentation images comprises a segmentation of the at least one object for the associated digital image, wherein the second image processing method is selected from the group consisting of boundary connectivity, dense and sparse reconstruction, a time property in an absorbing Markov chain, and hierarchy-associated rich features (HARF), and wherein the second image processing method is different from the first image processing method;
• training a second fully convolutional neural network using the plurality of digital images and the associated third segmentation images, wherein training the second fully convolutional neural network comprises:
∘ the second fully convolutional neural network generating a plurality of second intermediate segmentation images for the plurality of digital images, wherein each second intermediate segmentation image of the plurality of second intermediate segmentation images comprises a segmentation of the at least one object for the associated digital image;
∘ adapting the second fully convolutional neural network using a second loss value determined for each second intermediate segmentation image of the plurality of second intermediate segmentation images by comparing the respective second intermediate segmentation image with the associated third segmentation image;
• the trained second fully convolutional neural network generating a plurality of fourth segmentation images for the plurality of digital images, wherein each fourth segmentation image of the plurality of fourth segmentation images comprises a segmentation of the at least one object for the associated digital image;
• training the neural network using the plurality of digital images and the associated second segmentation images and fourth segmentation images, wherein training the neural network comprises:
∘ the neural network generating a plurality of fifth segmentation images for the plurality of digital images;
∘ determining a first intermediate loss value for each fifth segmentation image of the plurality of fifth segmentation images by comparing the respective fifth segmentation image with the associated second segmentation image;
∘ determining a second intermediate loss value for each fifth segmentation image of the plurality of fifth segmentation images by comparing the respective fifth segmentation image with the associated fourth segmentation image;
∘ adapting the neural network using the first intermediate loss values and the second intermediate loss values.

2. The method of claim 1,
wherein training the first fully convolutional neural network further comprises:
• the first fully convolutional neural network generating a plurality of third intermediate segmentation images for the plurality of digital images, wherein each third intermediate segmentation image of the plurality of third intermediate segmentation images comprises a segmentation of the at least one object for the associated digital image;
• adapting the first fully convolutional neural network by comparing the plurality of third intermediate segmentation images with the associated first intermediate segmentation images.

3. The method of claim 2,
wherein training the first convolutional neural network further comprises:
• generating a plurality of first moving average segmentation images using the plurality of first intermediate segmentation images and the plurality of third intermediate segmentation images;
• the first fully convolutional neural network generating a plurality of fourth intermediate segmentation images for the plurality of digital images, wherein each fourth intermediate segmentation image of the plurality of fourth intermediate segmentation images comprises a segmentation of the at least one object for the associated digital image;
• adapting the first fully convolutional neural network by comparing the plurality of fourth intermediate segmentation images with the associated first moving average segmentation images.

4. The method of any one of claims 1 to 3,
wherein training the second fully convolutional network further comprises:
• the second fully convolutional neural network generating a plurality of fifth intermediate segmentation images for the plurality of digital images, wherein each fifth intermediate segmentation image of the plurality of fifth intermediate segmentation images comprises a segmentation of the at least one object for the associated digital image;
• adapting the second fully convolutional neural network by comparing the plurality of fifth intermediate segmentation images with the associated second intermediate segmentation images.

5. The method of claim 4,
wherein training the second fully convolutional neural network further comprises:
• generating a plurality of second moving average segmentation images using the plurality of second intermediate segmentation images and the plurality of fifth intermediate segmentation images;
• the second fully convolutional neural network generating a plurality of sixth intermediate segmentation images for the plurality of digital images, wherein each sixth intermediate segmentation image of the plurality of sixth intermediate segmentation images comprises a segmentation of the at least one object for the associated digital image;
• adapting the second fully convolutional neural network by comparing the plurality of sixth intermediate segmentation images with the associated second moving average segmentation images.

6. A training device, comprising one or more processors configured to perform the method of any one of claims 1 to 5.

7. An optical inspection system, comprising:
at least one imaging sensor, configured to provide digital images;
a defect detection system, comprising
a memory device configured to store the digital images by the at least one imaging sensor;
a processor configured to process the digital images using a neural network trained by the method of any one of claims 1 to 5 and to detect defect parts using the processed digital images.

## Patentansprüche

1. Verfahren zum computer-implementierten Trainieren eines neuronalen Netzwerks, wobei das Verfahren Folgendes umfasst:
• ein erstes Bildverarbeitungsverfahren, das eine Mehrzahl erster Segmentierungsbilder für eine Mehrzahl digitaler Bilder erzeugt, wobei jedes digitale Bild der Mehrzahl digitaler Bilder mindestens ein Objekt umfasst und wobei jedes erste Segmentierungsbild der Mehrzahl erster Segmentierungsbilder eine Segmentierung des mindestens einen Objekts für das assoziierte digitale Bild umfasst, wobei das erste Bildverarbeitungsverfahren aus der Gruppe ausgewählt ist, die besteht aus Grenzkonnektivität, dichter und spärlicher Rekonstruktion, einer Zeiteigenschaft in einer absorbierenden Markov-Kette und hierarchieassoziierten reichhaltigen Merkmalen (HARF);
• Trainieren eines ersten vollständig faltenden neuronalen Netzwerks unter Verwendung der Mehrzahl digitaler Bilder und der assoziierten ersten Segmentierungsbilder, wobei Trainieren des ersten vollständig faltenden neuronalen Netzwerks Folgendes umfasst:
∘ Erzeugen, durch das erste vollständig faltende neuronale Netzwerk, einer Mehrzahl erster Zwischensegmentierungsbilder für die Mehrzahl digitaler Bilder, wobei jedes erste Zwischensegmentierungsbild der Mehrzahl erster Zwischensegmentierungsbilder eine Segmentierung des mindestens einen Objekts für das assoziierte digitale Bild umfasst;
∘ Anpassen des ersten vollständig faltenden neuronalen Netzwerks unter Verwendung eines ersten Verlustwerts, der für jedes erste Zwischensegmentierungsbild der Mehrzahl erster Zwischensegmentierungsbilder bestimmt wird, durch Vergleichen des jeweiligen ersten Zwischensegmentierungsbildes mit dem assoziierten ersten Segmentierungsbild;
• Erzeugen, durch das trainierte erste vollständig faltende neuronale Netzwerk, einer Mehrzahl zweiter Segmentierungsbilder für die Mehrzahl digitaler Bilder, wobei jedes zweite Segmentierungsbild der Mehrzahl zweiter Segmentierungsbilder eine Segmentierung des mindestens einen Objekts für das assoziierte digitale Bild umfasst;
• ein zweites Bildverarbeitungsverfahren, das eine Mehrzahl dritter Segmentierungsbilder für die Mehrzahl digitaler Bilder erzeugt, wobei jedes dritte Segmentierungsbild der Mehrzahl dritter Segmentierungsbilder eine Segmentierung des mindestens einen Objekts für das assoziierte digitale Bild umfasst, wobei das zweite Bildverarbeitungsverfahren aus der Gruppe ausgewählt ist, die besteht aus Grenzkonnektivität, dichter und spärlicher Rekonstruktion, einer Zeiteigenschaft in einer absorbierenden Markov-Kette, und hierarchieassoziierten reichhaltigen Merkmalen (HARF), und wobei sich das zweite Bildverarbeitungsverfahren von dem ersten Bildverarbeitungsverfahren unterscheidet;
• Trainieren eines zweiten vollständig faltenden neuronalen Netzwerks unter Verwendung der Mehrzahl digitaler Bilder und der assoziierten dritten Segmentierungsbilder, wobei Trainieren des zweiten vollständig faltenden neuronalen Netzwerks Folgendes umfasst:
∘ Erzeugen, durch das zweite vollständig faltende neuronale Netzwerk, einer Mehrzahl zweiter Zwischensegmentierungsbilder für die Mehrzahl digitaler Bilder, wobei jedes zweite Zwischensegmentierungsbild der Mehrzahl zweiter Zwischensegmentierungsbilder eine Segmentierung des mindestens einen Objekts für das assoziierte digitale Bild umfasst;
∘ Anpassen des zweiten vollständig faltenden neuronalen Netzwerks unter Verwendung eines zweiten Verlustwerts, der für jedes zweite Zwischensegmentierungsbild der Mehrzahl zweiter Zwischensegmentierungsbilder bestimmt wird, durch Vergleichen des jeweiligen zweiten Zwischensegmentierungsbildes mit dem assoziierten dritten Segmentierungsbild;
• Erzeugen, durch das trainierte zweite vollständig faltende neuronale Netzwerk, einer Mehrzahl vierter Segmentierungsbilder für die Mehrzahl digitaler Bilder, wobei jedes vierte Segmentierungsbild der Mehrzahl vierter Segmentierungsbilder eine Segmentierung des mindestens einen Objekts für das assoziierte digitale Bild umfasst;
• Trainieren des neuronalen Netzwerks unter Verwendung der Mehrzahl digitaler Bilder und der assoziierten zweiten Segmentierungsbilder und vierten Segmentierungsbilder, wobei Trainieren des neuronalen Netzwerks Folgendes umfasst:
∘ Erzeugen, durch das neuronale Netzwerk, einer Mehrzahl fünfter Segmentierungsbilder für die Mehrzahl digitaler Bilder;
∘ Bestimmen eines ersten Verlustzwischenwerts für jedes fünfte Segmentierungsbild der Mehrzahl fünfter Segmentierungsbilder durch Vergleichen des jeweiligen fünften Segmentierungsbildes mit dem assoziierten zweiten Segmentierungsbild;
∘ Bestimmen eines zweiten Verlustzwischenwerts für jedes fünfte Segmentierungsbild der Mehrzahl fünfter Segmentierungsbilder durch Vergleichen des jeweiligen fünften Segmentierungsbildes mit dem assoziierten vierten Segmentierungsbild;
∘ Anpassen des neuronalen Netzwerks unter Verwendung der ersten Zwischenverlustwerte und der zweiten Zwischenverlustwerte.

2. Verfahren nach Anspruch 1,
wobei das Trainieren des ersten vollständig faltenden neuronalen Netzwerks ferner Folgendes umfasst:
• Erzeugen, durch das erste vollständig faltende neuronale Netzwerk, einer Mehrzahl dritter Zwischensegmentierungsbilder für die Mehrzahl digitaler Bilder, wobei jedes dritte Zwischensegmentierungsbild der Mehrzahl dritter Zwischensegmentierungsbilder eine Segmentierung des mindestens einen Objekts für das assoziierte digitale Bild umfasst;
• Anpassen des ersten vollständig faltenden neuronalen Netzwerks durch Vergleichen der Mehrzahl dritter Zwischensegmentierungsbilder mit den assoziierten ersten Zwischensegmentierungsbildern.

3. Verfahren nach Anspruch 2,
wobei das Trainieren des ersten neuronalen Faltungsnetzwerks ferner Folgendes umfasst:
• Erzeugen einer Mehrzahl erster gleitender durchschnittlicher Segmentierungsbilder unter Verwendung der Mehrzahl erster Zwischensegmentierungsbilder und der Mehrzahl dritter Zwischensegmentierungsbilder;
• Erzeugen, durch das erste vollständig faltende neuronale Netzwerk, einer Mehrzahl vierter Zwischensegmentierungsbilder für die Mehrzahl digitaler Bilder, wobei jedes vierte Zwischensegmentierungsbild der Mehrzahl vierter Zwischensegmentierungsbilder eine Segmentierung des mindestens einen Objekts für das assoziierte digitale Bild umfasst;
• Anpassen des ersten vollständig faltenden neuronalen Netzwerks durch Vergleichen der Mehrzahl vierter Zwischensegmentierungsbilder mit den assoziierten ersten gleitenden durchschnittlichen Segmentierungsbildern.

4. Verfahren nach einem der Ansprüche 1 bis 3,
wobei das Trainieren des zweiten vollständig faltenden Netzwerks ferner Folgendes umfasst:
• Erzeugen, durch das zweite vollständig faltende neuronale Netzwerk, einer Mehrzahl fünfter Zwischensegmentierungsbilder für die Mehrzahl digitaler Bilder, wobei jedes fünfte Zwischensegmentierungsbild der Mehrzahl fünfter Zwischensegmentierungsbilder eine Segmentierung des mindestens einen Objekts für das assoziierte digitale Bild umfasst;
• Anpassen des zweiten vollständig faltenden neuronalen Netzwerks durch Vergleichen der Mehrzahl fünfter Zwischensegmentierungsbilder mit den assoziierten zweiten Zwischensegmentierungsbildern.

5. Verfahren nach Anspruch 4,
wobei das Trainieren des zweiten vollständig faltenden neuronalen Netzwerks ferner Folgendes umfasst:
• Erzeugen einer Mehrzahl zweiter gleitender durchschnittlicher Segmentierungsbilder unter Verwendung der Mehrzahl zweiter Zwischensegmentierungsbilder und der Mehrzahl fünfter Zwischensegmentierungsbilder;
• Erzeugen, durch das zweite vollständig faltende neuronale Netzwerk, einer Mehrzahl sechster Zwischensegmentierungsbilder für die Mehrzahl digitaler Bilder, wobei jedes sechste Zwischensegmentierungsbild der Mehrzahl sechster Zwischensegmentierungsbilder eine Segmentierung des mindestens einen Objekts für das assoziierte digitale Bild umfasst;
• Anpassen des zweiten vollständig faltenden neuronalen Netzwerks durch Vergleichen der Mehrzahl sechster Zwischensegmentierungsbilder mit den assoziierten zweiten gleitenden durchschnittlichen Segmentierungsbildern.

6. Trainingsvorrichtung, die einen oder mehrere Prozessoren umfasst, die dazu ausgelegt sind, das Verfahren nach einem der Ansprüche 1 bis 5 durchzuführen.

7. Optisches Inspektionssystem, das Folgendes umfasst:
wenigstens einen Bildgebungssensor, der zum Bereitstellen digitaler Bilder konfiguriert ist;
ein Defektdetektionssystem, das Folgendes umfasst
eine Speichervorrichtung, die dazu ausgelegt ist, die digitalen Bilder durch den mindestens einen Bildgebungssensor zu speichern;
einen Prozessor, der dazu ausgelegt ist, die digitalen Bilder unter Verwendung eines neuronalen Netzwerks zu verarbeiten, das durch das Verfahren nach einem der Ansprüche 1 bis 5 trainiert wird, und defekte Teile unter Verwendung der verarbeiteten digitalen Bilder zu detektieren.

## Revendications

1. Procédé d'entraînement mis en œuvre par ordinateur d'un réseau neuronal, le procédé comprenant :
• un premier procédé de traitement d'images générant une pluralité de premières images de segmentation pour une pluralité d'images numériques, dans lequel chaque image numérique de la pluralité d'images numériques comprend au moins un objet et dans lequel chaque première image de segmentation de la pluralité de premières images de segmentation comprend une segmentation de l'au moins un objet pour l'image numérique associée, dans lequel le premier procédé de traitement d'images est sélectionné dans le groupe consistant en connectivité aux frontières, reconstruction dense et clairsemée, une propriété de temps dans une chaîne de Markov absorbante, et des caractéristiques riches associées à une hiérarchie (HARF) ;
• l'entraînement d'un premier réseau neuronal entièrement convolutionnel à l'aide de la pluralité d'images numériques et des premières images de segmentation associées, dans lequel l'entraînement du premier réseau neuronal entièrement convolutionnel comprend :
∘ la génération par le premier réseau neuronal entièrement convolutionnel d'une pluralité de premières images de segmentation intermédiaires pour la pluralité d'images numériques, dans lequel chaque première image de segmentation intermédiaire de la pluralité de premières images de segmentation intermédiaires comprend une segmentation de l'au moins un objet pour l'image numérique associée ;
∘ l'adaptation du premier réseau neuronal entièrement convolutionnel à l'aide d'une première valeur de perte déterminée pour chaque première image de segmentation intermédiaire de la pluralité de premières images de segmentation intermédiaires en comparant la première image de segmentation intermédiaire respective avec la première image de segmentation associée ;
• la génération par le premier réseau neuronal entièrement convolutionnel entraîné d'une pluralité de deuxièmes images de segmentation pour la pluralité d'images numériques, dans lequel chaque deuxième image de segmentation de la pluralité de deuxièmes images de segmentation comprend une segmentation de l'au moins un objet pour l'image numérique associée ;
• la génération par un deuxième procédé de traitement d'images d'une pluralité de troisièmes images de segmentation pour la pluralité d'images numériques, dans lequel chaque troisième image de segmentation de la pluralité de troisièmes images de segmentation comprend une segmentation de l'au moins un objet pour l'image numérique associée, dans lequel le deuxième procédé de traitement d'images est sélectionné dans le groupe consistant en connectivité aux frontières, reconstruction dense et clairsemée, une propriété de temps dans une chaîne de Markov absorbante, et des caractéristiques riches associées à une hiérarchie (HARF), et dans lequel le deuxième procédé de traitement d'images est différent du premier procédé de traitement d'images ;
• l'entraînement d'un deuxième réseau neuronal entièrement convolutionnel à l'aide de la pluralité d'images numériques et des troisièmes images de segmentation associées, dans lequel l'entraînement du deuxième réseau neuronal entièrement convolutionnel comprend :
∘ la génération par le deuxième réseau neuronal entièrement convolutionnel d'une pluralité de deuxièmes images de segmentation intermédiaires pour la pluralité d'images numériques, dans lequel chaque deuxième image de segmentation intermédiaire de la pluralité de deuxièmes images de segmentation intermédiaires comprend une segmentation de l'au moins un objet pour l'image numérique associée ;
∘ l'adaptation du deuxième réseau neuronal entièrement convolutionnel à l'aide d'une deuxième valeur de perte déterminée pour chaque deuxième image de segmentation intermédiaire de la pluralité de deuxièmes images de segmentation intermédiaires en comparant la deuxième image de segmentation intermédiaire respective avec la troisième image de segmentation associée ;
• la génération par le deuxième réseau neuronal entièrement convolutionnel entraîné d'une pluralité de quatrièmes images de segmentation pour la pluralité d'images numériques, dans lequel chaque quatrième image de segmentation de la pluralité de quatrièmes images de segmentation comprend une segmentation de l'au moins un objet pour l'image numérique associée ;
• l'entraînement du réseau neuronal à l'aide de la pluralité d'images numériques et des deuxièmes images de segmentation et des quatrièmes images de segmentation associées, dans lequel l'entraînement du réseau neuronal comprend :
∘ la génération par le réseau neuronal d'une pluralité de cinquièmes images de segmentation pour la pluralité d'images numériques ;
∘ la détermination d'une première valeur de perte intermédiaire pour chaque cinquième image de segmentation de la pluralité de cinquièmes images de segmentation en comparant la cinquième image de segmentation respective avec la deuxième image de segmentation associée ;
∘ la détermination d'une deuxième valeur de perte intermédiaire pour chaque cinquième image de segmentation de la pluralité de cinquièmes images de segmentation en comparant la cinquième image de segmentation respective avec la quatrième image de segmentation associée ;
∘ l'adaptation du réseau neuronal à l'aide des premières valeurs de perte intermédiaires et des deuxièmes valeurs de perte intermédiaires.

2. Procédé selon la revendication 1,
dans lequel l'entraînement du premier réseau neuronal entièrement convolutionnel comprend en outre :
• la génération par le premier réseau neuronal entièrement convolutionnel d'une pluralité de troisièmes images de segmentation intermédiaires pour la pluralité d'images numériques, dans lequel chaque troisième image de segmentation intermédiaire de la pluralité de troisièmes images de segmentation intermédiaires comprend une segmentation de l'au moins un objet pour l'image numérique associée ;
• l'adaptation du premier réseau neuronal entièrement convolutionnel en comparant la pluralité de troisièmes images de segmentation intermédiaires avec les premières images de segmentation intermédiaires associées.

3. Procédé selon la revendication 2,
dans lequel l'entraînement du premier réseau neuronal convolutionnel comprend en outre :
• la génération d'une pluralité de premières images de segmentation à moyenne mobile à l'aide de la pluralité de premières images de segmentation intermédiaires et de la pluralité de troisièmes images de segmentation intermédiaires ;
• la génération par le premier réseau neuronal entièrement convolutionnel d'une pluralité de quatrièmes images de segmentation intermédiaires pour la pluralité d'images numériques, dans lequel chaque quatrième image de segmentation intermédiaire de la pluralité de quatrièmes images de segmentation intermédiaires comprend une segmentation de l'au moins un objet pour l'image numérique associée ;
• l'adaptation du premier réseau neuronal entièrement convolutionnel en comparant la pluralité de quatrièmes images de segmentation intermédiaires avec les premières images de segmentation à moyenne mobile associées.

4. Procédé selon l'une quelconque des revendications 1 à 3,
dans lequel l'entraînement du deuxième réseau entièrement convolutionnel comprend en outre :
• la génération par le deuxième réseau neuronal entièrement convolutionnel d'une pluralité de cinquièmes images de segmentation intermédiaires pour la pluralité d'images numériques, dans lequel chaque cinquième image de segmentation intermédiaire de la pluralité de cinquièmes images de segmentation intermédiaires comprend une segmentation de l'au moins un objet pour l'image numérique associée ;
• l'adaptation du deuxième réseau neuronal entièrement convolutionnel en comparant la pluralité de cinquièmes images de segmentation intermédiaires avec les deuxièmes images de segmentation intermédiaires associées.

5. Procédé selon la revendication 4,
dans lequel l'entraînement du deuxième réseau neuronal entièrement convolutionnel comprend en outre :
• la génération d'une pluralité de deuxièmes images de segmentation à moyenne mobile à l'aide de la pluralité de deuxièmes images de segmentation intermédiaires et de la pluralité de cinquièmes images de segmentation intermédiaires ;
• la génération par le deuxième réseau neuronal entièrement convolutionnel d'une pluralité de sixièmes images de segmentation intermédiaires pour la pluralité d'images numériques, dans lequel chaque sixième image de segmentation intermédiaire de la pluralité de sixièmes images de segmentation intermédiaires comprend une segmentation de l'au moins un objet pour l'image numérique associée ;
• l'adaptation du deuxième réseau neuronal entièrement convolutionnel en comparant la pluralité de sixièmes images de segmentation intermédiaires avec les deuxièmes images de segmentation à moyenne mobile associées.

6. Dispositif d'entraînement, comprenant un ou plusieurs processeurs configurés pour réaliser le procédé selon l'une quelconque des revendications 1 à 5.

7. Système de contrôle optique, comprenant :
au moins un capteur d'imagerie, configuré pour fournir des images numériques ;
un système de détection de défauts, comprenant
un dispositif de mémoire configuré pour stocker les images numériques par l'au moins un capteur d'imagerie ;
un processeur configuré pour traiter les images numériques à l'aide d'un réseau neuronal entraîné par le procédé selon l'une quelconque des revendications 1 à 5 et pour détecter des pièces défectueuses à l'aide des images numériques traitées.
